# EUROPEAN PATENT APPLICATION

(11) **EP 4 312 400 A1**
(43) Date of publication of application: **31.01.2024**
(21) Application number: 23168696.5
(22) Date of filing: 19.04.2023
(51) Int. Cl.: H04L 9/40, G06F 21/55

(54) **ATTACK SITUATION OUTPUT PROGRAM, ATTACK SITUATION OUTPUT DEVICE, AND ATTACK SITUATION OUTPUT SYSTEM**

(30) Priority: 27.07.2022 JP 2022119406
(71) Applicant: FUJITSU LIMITED, Kawasaki-shi, Kanagawa 211-8588 (JP)
(72) Inventor: OIKAWA, Takanori, Kawasaki-shi, Kanagawa, 211-8588 (JP); KOKUBO, Hirotaka, Kawasaki-shi, Kanagawa, 211-8588 (JP); MORIKAWA, Ikuya, Kawasaki-shi, Kanagawa, 211-8588 (JP)
(74) Representative: Hoffmann Eitle

(57) **Abstract**

An attack situation output program for causing a computer to execute a process, the process includes extracting, from information regarding communication that includes a threat level of an attack, information regarding first communication in which the threat level satisfies a first condition, executing anomaly detection processing that detects a suspicious terminal by using the information regarding the first communication of each terminal, and outputting information regarding a first terminal detected as the suspicious terminal by the anomaly detection processing and information regarding content of an attack that corresponds to the first condition, in association with each other.

## Description

### FIELD

The embodiment discussed herein is related to an attack situation output program, an attack situation output device, and an attack situation output system.

### BACKGROUND

With development of computers and telecommunication networks, use of data communication has spread dramatically. Not only companies but also ordinary individuals are increasingly using the Internet to download various types of information and set up their own web pages to transmit information.

In recent years, some malicious persons spread computer viruses, unauthorizedly access computers to steal personal information and confidential information, or attack specific servers to disable use thereof. As a device for preventing unauthorized access, in addition to a firewall computer, an intrusion detection system (IDS) that monitors data flowing through an internal network and detects unauthorized access is known.

The intrusion detection system (IDS) is a device that monitors packets flowing in a network, gives an alert when a packet having a possibility of unauthorized access is found, and collects and stores the communication record. The intrusion detection system may detect a Denial of Services (Dos) attack and a Distributed Denial of Service (DDos) attack. Furthermore, as a method of detecting unauthorized access by the IDS, "signature"-based intrusion detection is known. In this method, an intrusion is detected by performing matching with a pattern of a way of intrusion called a signature registered in advance.

Furthermore, recently, an anomaly terminal detection technology is known as a technology that detects an abnormal terminal (suspicious terminal) by using an alert (including erroneous detection) detected by an IDS. In this technology, alerts are collected in units of transmission source terminals, and an abnormal terminal is detected by unsupervised training on the premise that many of the terminals are normal terminals.

International Publication Pamphlet No. WO 2021/038870, Japanese Laid-open Patent Publication No. 2010-55566, U.S. Patent Application Publication No. 2016/0359891, and U.S. Patent Application Publication No. 2017/0323102 are disclosed as related art.

Since threat levels are set in signatures used in an IDS, the threat levels are also associated with alerts detected in the IDS. Therefore, in a case where abnormal terminals are detected as anomalies by using the alerts detected in the IDS, it is possible to improve accuracy of the anomaly detection by selecting the alerts based on the threat levels.

However, even when information regarding the abnormal terminals is output as a result of the anomaly detection, it is unclear what kind of attack each abnormal terminal is performing. Therefore, it is difficult for an administrator or the like to determine which terminal needs to be preferentially handled among the abnormal terminals.

### SUMMARY

In one aspect, an object of an embodiment is to provide an attack situation output program, an attack situation output device, and an attack situation output system capable of outputting information by which a terminal that needs to be preferentially handled may be determined.

According to an aspect of the embodiments, an attack situation output program for causing a computer to execute a process, the process includes extracting, from information regarding communication that includes a threat level of an attack, information regarding first communication in which the threat level satisfies a first condition, executing anomaly detection processing that detects a suspicious terminal by using the information regarding the first communication of each terminal, and outputting information regarding a first terminal detected as the suspicious terminal by the anomaly detection processing and information regarding content of an attack that corresponds to the first condition, in association with each other.

### BRIEF DESCRIPTION OF DRAWINGS

FIG. 1 is a diagram schematically illustrating a configuration of an attack situation output system according to an embodiment;
FIG. 2 is a diagram illustrating an example of an intrusion detection system (IDS) alert;
FIG. 3 is a diagram illustrating an example of a hardware configuration of an attack situation output device;
FIG. 4 is a functional block diagram of the attack situation output device;
FIGs. 5A to 5D are diagrams (part 1) for describing anomaly detection;
FIGs. 6A to 6D are diagrams (part 2) for describing the anomaly detection;
FIGs. 7A to 7D are diagrams (part 3) for describing the anomaly detection;
FIGs. 8A to 8D are diagrams (part 4) for describing the anomaly detection;
FIGs. 9A and 9B are diagrams illustrating an example of a result of the anomaly detection;
FIG. 10 is a diagram illustrating an example of attack situation determination conditions;
FIG. 11 is a diagram illustrating an example of a screen presented to an administrator;
FIG. 12A is a diagram illustrating an attack stage table, and FIG. 12B is a diagram illustrating an importance level table of a latent terminal;
FIG. 13 is a flowchart illustrating processing of the attack situation output device;
FIG. 14 is a diagram illustrating an example of intermediate data;
FIG. 15 is a diagram illustrating an analysis result of the intermediate data of FIG. 14;
FIG. 16 is a diagram (part 1) illustrating a table that may be used instead of the attack situation determination conditions of FIG. 10;
FIG. 17 is a diagram (part 2) illustrating a table that may be used instead of the attack situation determination conditions of FIG. 10;
FIG. 18 is a flowchart illustrating processing of the attack situation output device according to a first modification;
FIG. 19 is a diagram illustrating attack situation determination conditions used in a second modification; and
FIG. 20 is a flowchart illustrating processing of the attack situation output device according to the second modification.

### DESCRIPTION OF EMBODIMENTS

Hereinafter, embodiments of techniques capable of outputting information by which a terminal that needs to be preferentially handled may be determined will be described with reference to the drawings.

### Embodiments

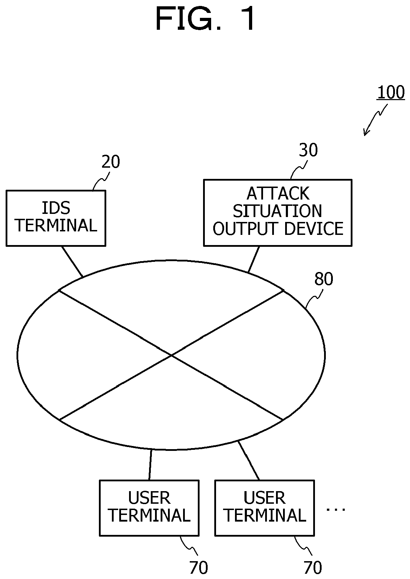

An embodiment of an attack situation output system will be described in detail with reference to FIGs. 1 to 15.

FIG. 1 schematically illustrates a configuration of an attack situation output system 100 according to an embodiment. The attack situation output system 100 of FIG. 1 includes a plurality of user terminals 70, an intrusion detection system (IDS) terminal 20 as a detection device, and an attack situation output device 30. Each device included in the attack situation output system 100 is coupled to a network 80 such as the Internet.

The user terminal 70 is an information processing device such as a computer terminal, and has a function of accessing the network 80 (a function of transmitting and receiving information via the network 80).

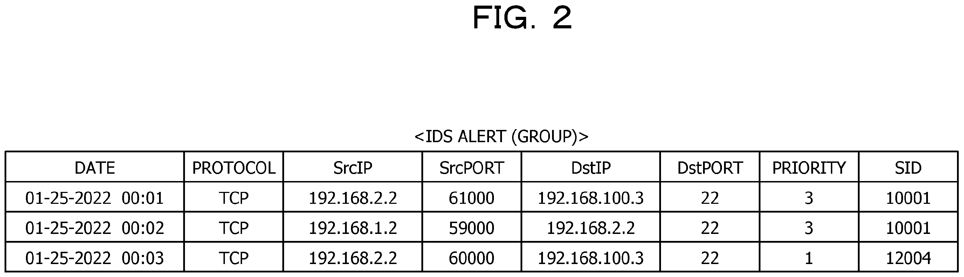

The IDS terminal 20 is an information processing device (such as a workstation or a server) or a network appliance device. The IDS terminal 20 monitors all packets flowing through the network 80, and alerts communication matching a detection rule (signature) as suspicious communication having a possibility of an attack activity. Here, Snort, Suricata, and the like are known as open source software (OSS) of an IDS. An IDS alert has a data structure as illustrated in FIG. 2, for example. Note that, in the present embodiment, it is assumed that an alert indicated in one line of FIG. 2 is referred to as an IDS alert, and a plurality of IDS alerts is referred to as an IDS alert group. As illustrated in FIG. 2, the IDS alert includes information such as a date and time (Date), a protocol (Protocol), a transmission source internet protocol (IP) (SrcIP), a transmission source port (SrcPort), a transmission destination IP (DstIP), a transmission destination port (DstPort), a threat level (Priority or Severity), and a signature identifier (ID) (SID). Note that the "threat level" is an index value indicating severity of damage in a case where the IDS alert is an attack. In FIG. 2, for example, the first and second IDS alerts from the top are communication matching the signature "10001" with the threat level "3", and the third IDS alert from the top is communication matching the signature "12004" with the threat level "1". The IDS terminal 20 transmits the IDS alert group as illustrated in FIG. 2 to the attack situation output device 30. A description format of the signature varies depending on a product or the like. As an example, the threat level is determined by magnitude of authority needed for the operation. When the operation may only be executed with authority of an administrator, the threat level is high.

The attack situation output device 30 is an information processing device (a workstation, a server, or the like) installed in a center that manages a situation regarding security of the user terminals 70. The attack situation output device 30 acquires and analyzes the IDS alert group (FIG. 2) transmitted from the IDS terminal 20, and outputs information regarding abnormal terminals.

Here, the IDS alerts transmitted from the IDS terminal 20 include business communication (erroneous detection) matching the signature. This is because operations frequently performed in business are also used in attack activities. Thus, the attack situation output device 30 of the present embodiment executes "anomaly detection" as an approach for extracting a particularly suspicious one from a huge number of IDS alerts.

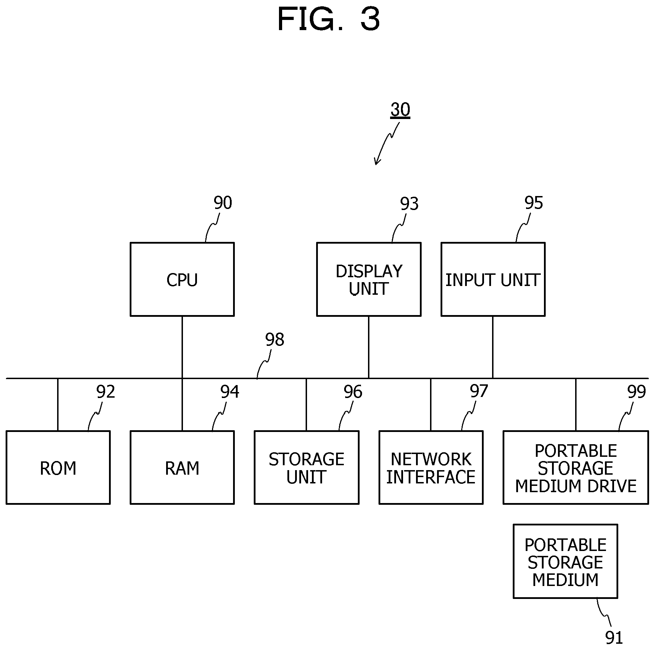

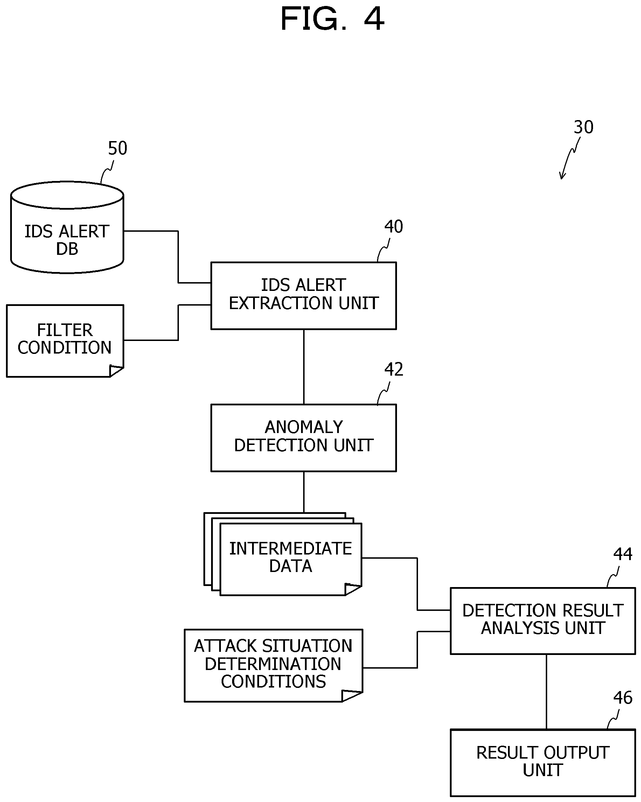

FIG. 3 illustrates an example of a hardware configuration of the attack situation output device 30. As illustrated in FIG. 3, the attack situation output device 30 includes a central processing unit (CPU)90, a read only memory (ROM) 92, a random access memory (RAM) 94, a storage unit (here, a solid state drive (SSD) or a hard disk drive (HDD)) 96, a network interface 97, a display unit 93, an input unit 95, a portable storage medium drive 99, and the like. The display unit 93 includes a liquid crystal display, an organic electroluminescent (EL) display, and the like, and the input unit 95 includes a keyboard, a mouse, a touch panel, and the like. Each of these components of the attack situation output device 30 is coupled to a bus 98. In the attack situation output device 30, the CPU 90 executes a program (including an attack situation output program) stored in the ROM 92 or the storage unit 96 or a program read by the portable storage medium drive 99 from a portable storage medium 91, thereby implementing a function of each unit illustrated in FIG. 4. Note that the function of each unit of FIG. 4 may be implemented by, for example, an integrated circuit such as an application specific integrated circuit (ASIC) or a field programmable gate array (FPGA).

FIG. 4 illustrates a functional block diagram of the attack situation output device 30. As illustrated in FIG. 4, the attack situation output device 30 includes an IDS alert extraction unit 40 as an extraction unit, an anomaly detection unit 42 as an execution unit, a detection result analysis unit 44, and a result output unit 46.

The IDS alert extraction unit 40 extracts, based on a filter condition (first condition), a part or all of IDS alerts (IDS alert group acquired from the IDS terminal 20) stored in an IDS alert database (DB) 50 (information regarding first communication). Furthermore, the IDS alert extraction unit 40 executes processing of collecting the extracted IDS alerts for each user terminal 70 as a transmission source (for each SrcIP). Note that the filter condition (also referred to as an extraction condition) in the present embodiment changes an extraction range (lower limit value) stepwise such as the threat level of "3" or more, "2" or more, and "1" or more. However, the present disclosure is not limited to this, and there is a filter condition (extraction condition) that changes an extraction range (upper limit value) stepwise such as the threat level of "1" or less, "2" or less, and "3" or less. Furthermore, there is a filter condition (extraction condition) that changes an extraction range stepwise such as the threat level of "1" only, "2" only, and "3" only. The administrator may set in advance which filter condition to use.

The anomaly detection unit 42 executes anomaly detection by using IDS alerts (group) collected for each user terminal 70 (SrcIP) as a transmission source. The anomaly detection is also referred to as anomaly detection, abnormality detection, Anomaly Detection, or the like, and is machine learning classified as "unsupervised training" that detects abnormal data based on the premise that most of the entire given data is normal.

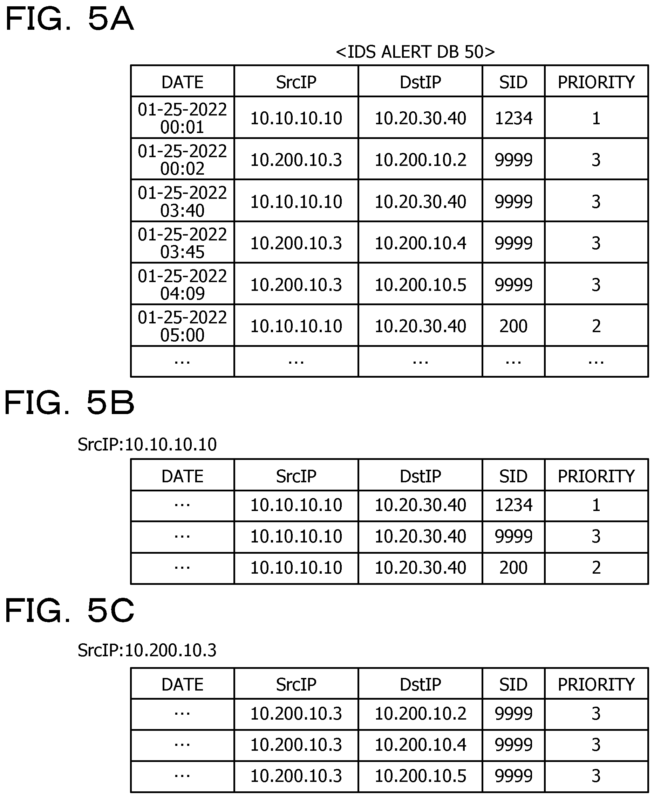

Here, as an example, it is assumed that an IDS alert group as illustrated in FIG. 5A is stored in the IDS alert DB 50. Note that, in FIG. 5A, columns other than columns needed for description are omitted to illustrate the columns. In this case, it is assumed that, by extracting IDS alerts under a condition of the threat level (Priority) "1" or more and collecting the IDS alerts for each user terminal 70 (for each SrcIP), a result as illustrated in FIGs. 5B and 5C is obtained. Note that FIGs. 5B and 5C illustrate an example in which the IDS alerts with the transmission source IPs "10.10.10.10" and "10.200.10.3" are collected, respectively, but IDS alerts with other transmission source IPs are similarly collected.

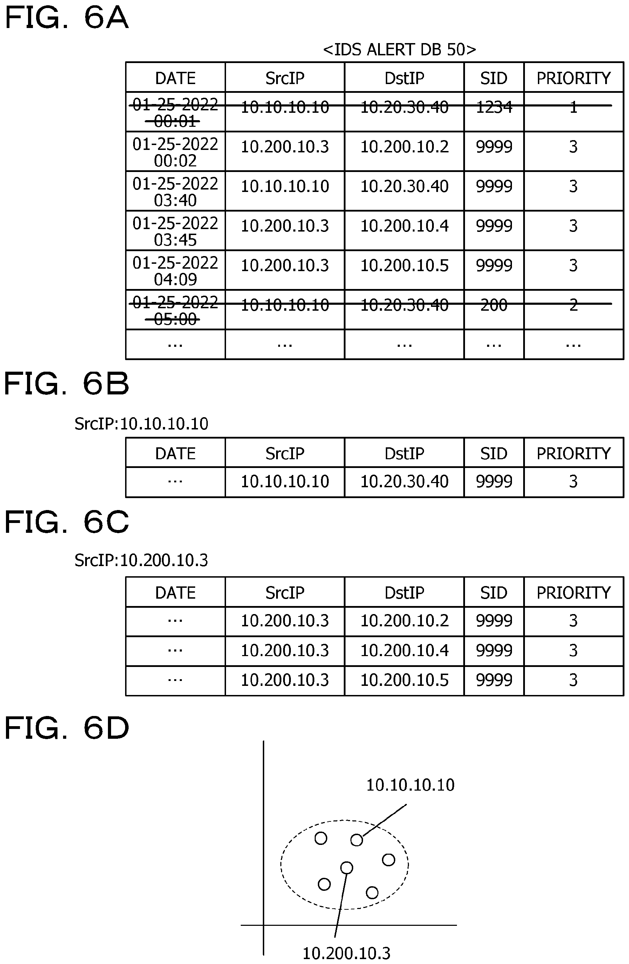

On the other hand, it is assumed that, in a case where IDS alerts are extracted under a condition of the threat level (Priority) "3" or more as illustrated in FIG. 6A, the IDS alerts extracted for each user terminal 70 (for each SrcIP) are collected, and a result as illustrated in FIGs. 6B and 6C are obtained.

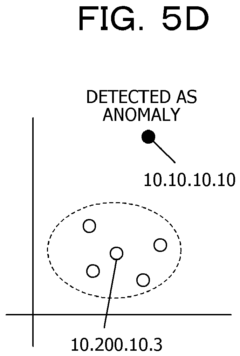

FIG. 5D schematically illustrates a result of executing anomaly detection by using the IDS alerts (threat level "1" or more) collected in units of the user terminals 70 illustrated in FIGs. 5B and 5C. Furthermore, FIG. 6D schematically illustrates a result of executing anomaly detection by using the IDS alerts (threat level "3" or more) collected in units of the user terminals 70 illustrated in FIGs. 6B and 6C. In FIG. 5D, the user terminal 70 with the IP address "10.10.10.10" is detected as an abnormal terminal (anomaly), but in FIG. 6D, the user terminal 70 with the IP address "10.10.10.10" is not detected as an abnormal terminal. In this way, when the extraction condition of the IDS alert is different, there is a possibility that a detection result of an abnormal terminal changes.

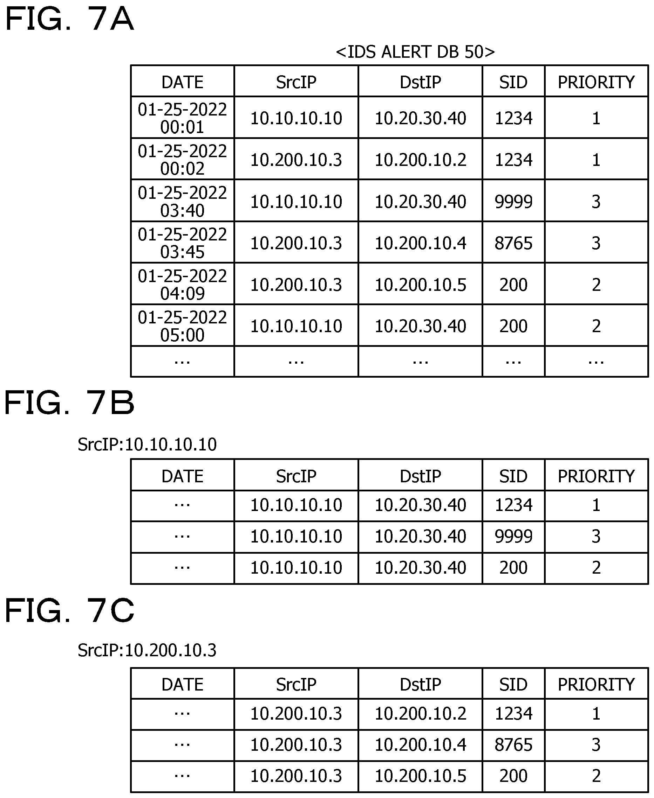

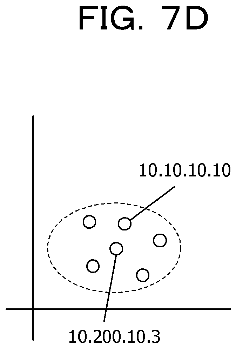

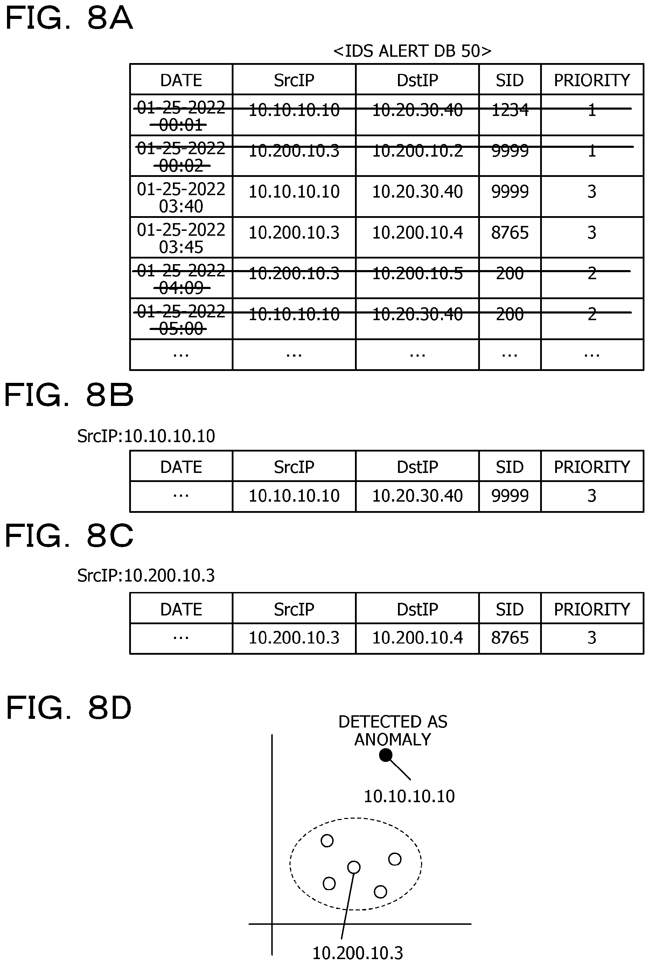

Note that the examples of FIGs. 5A to 5D and FIGs. 6A to 6D illustrate an example in which the user terminal 70 with the IP address "10.10.10.10" is detected as an abnormal terminal when there are many IDS alerts to be extracted, and vice versa. For example, in the examples of FIGs. 7A to 7D, in a case where IDS alerts are extracted under the condition of the threat level "1" or more, the user terminal 70 with the IP address "10.10.10.10" is not detected as an abnormal terminal. On the other hand, in the examples of FIGs. 8A to 8D, in a case where IDS alerts are extracted under the condition of the threat level "3" or more, the user terminal 70 with the IP address "10.10.10.10" is detected as an abnormal terminal.

From the above, in the anomaly detection, it is considered that there is a possibility that an abnormal terminal may not be detected or an attack may be overlooked unless the extraction condition of the IDS alert is appropriately set. Furthermore, even when the extraction condition is changed stepwise and the anomaly detection is performed a plurality of times, it is considered that it is not possible to know which terminal needs to be preferentially handled by simply outputting results of the anomaly detection performed a plurality of times.

Thus, in the present embodiment, the detection result analysis unit 44 analyzes an attack situation of each user terminal 70 by using a result of executing the anomaly detection while changing the extraction condition stepwise. Here, in a case where the IDS alert is an attack, the detection result analysis unit 44 analyzes the attack situation by using a property that an attack progress stage may be estimated based on content of the threat level.

As described above, the threat level is often determined by "magnitude of authority needed for the operation (for example, high risk because the operation may only be executed with authority of the administrator).

On the other hand, a targeted attack progresses in a way that allows an attacker to increase the attacker's ability (increases authority) in an organization to be attacked for the purpose of "information theft" or "destruction".

For example,
(1) when there are only alerts having low threat levels, it may be analyzed that the attack is in an initial stage (intelligence activity) in which the attacker performs trial and error with an operation with small authority in order to increase the authority,
(2) when all alerts having low to high threat levels are included, it may be analyzed that the attack is in a middle stage (wide range of activities including searching, collecting information, spreading infections, and the like), and
(3) when there are only alerts having a high threat level, it may be analyzed that the trial and error ends and the attack is in an end stage (destructive activity) in which "information theft" and "destruction" which are final objects are performed.

Note that, in a case where an alert is business (in the case of erroneous detection), it may be analyzed that there is a high possibility that the user terminal 70 in which the alert having the high threat level is generated is an important business terminal performing an operation with large authority.

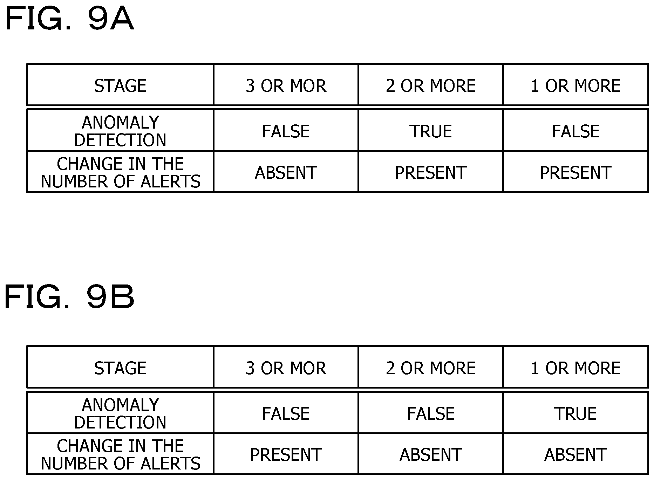

For example, the IDS alert extraction unit 40 sets the extraction condition to the threat level "3" or more and extracts IDS alerts, and the anomaly detection unit 42 collects the extracted IDS alerts in units of the user terminals 70 and executes anomaly detection. Next, the IDS alert extraction unit 40 sets the extraction condition to the threat level "2" or more and extracts IDS alerts, and the anomaly detection unit 42 collects the extracted IDS alerts in units of the user terminals 70 and executes anomaly detection. Moreover, the IDS alert extraction unit 40 sets the extraction condition to the threat level "1" or more and extracts IDS alerts, and the anomaly detection unit 42 collects the extracted IDS alerts in units of the user terminals 70 and executes anomaly detection. It is assumed that, as a result of the series of anomaly detection, a result as illustrated in FIG. 9A is obtained for a certain terminal. Note that, in a row of "anomaly detection" of FIG. 9A, as a result of performing the anomaly detection under each condition, "TRUE" is stored in a case where the terminal is detected as an abnormal terminal, and "FALSE" is stored in a case where the terminal is not detected as an abnormal terminal. Furthermore, in a row of "change in the number of alerts", when each condition is used, "present" is stored when the number of alerts has changed from that of the previous condition, and "absent" is stored when the number of alerts has not changed. Specifically, when the extraction condition is the threat level "3" or more, "present" is stored when the IDS alerts are extracted, and "absent" is stored when the IDS alert is not extracted. Furthermore, "present" is stored in a case where the IDS alerts are extracted when the extraction condition is the threat level "2" or more and the number of the extracted IDS alerts is different from the number of IDS alerts extracted when the threat level is "3" or more, and "absent" is stored otherwise. Furthermore, "present" is stored in a case where the IDS alerts are extracted when the threat level is "1" or more and the number of the extracted IDS alerts is different from the number of IDS alerts extracted when the threat level is "2" or more, and "absent" is stored otherwise.

The detection result analysis unit 44 analyzes the situation of the attack ("threat level of the alert related to the attack" and "threat level of the alert related to business of the latent terminal") by using the result of FIG. 9A. For example, in the case of FIG. 9A, "FALSE" is stored due to the IDS alert having the threat level of "1" or more and less than "2". That is, it is considered that the alert with "1" or more and less than "2" is a business activity, and the attack activity of the alert with "2" or more is performed while hiding in the business activity. Therefore, the detection result analysis unit 44 analyzes that the "threat level of the alert related to the attack" is "2" or more and the "threat level of the alert related to business of the latent terminal" is "1" or more.

Furthermore, for example, in a case where a result as illustrated in FIG. 9B is obtained, although both the IDS alerts with "3" or more and "1" or more are supposed to be included in the case of the business, there is no IDS alert with "1" or more, and thus there is a possibility that anomaly detection is performed. Therefore, in this case, the detection result analysis unit 44 analyzes that the "threat level of the alert related to the attack" is "3" or more and the "threat level of the alert related to business of the latent terminal" is "absent".

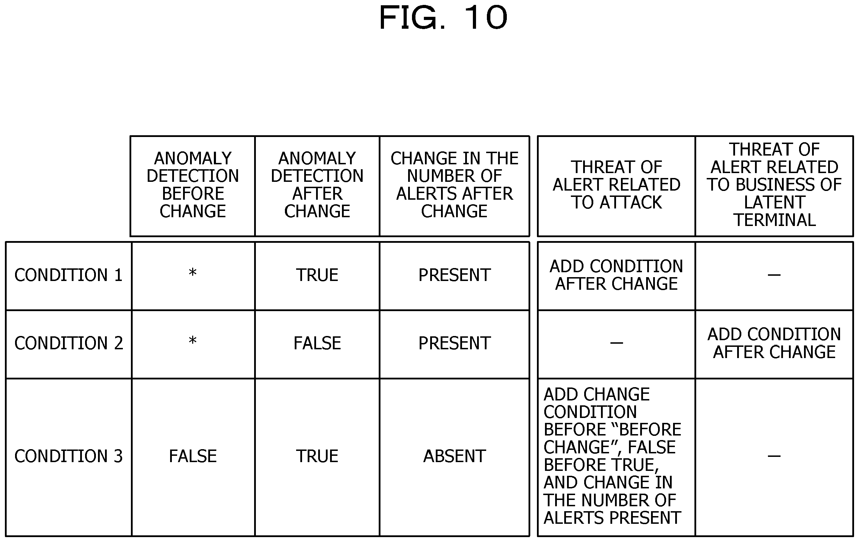

Note that the detection result analysis unit 44 actually executes the analysis by using attack situation determination conditions as illustrated in FIG. 10. Details of the attack situation determination conditions of FIG. 10 will be described later.

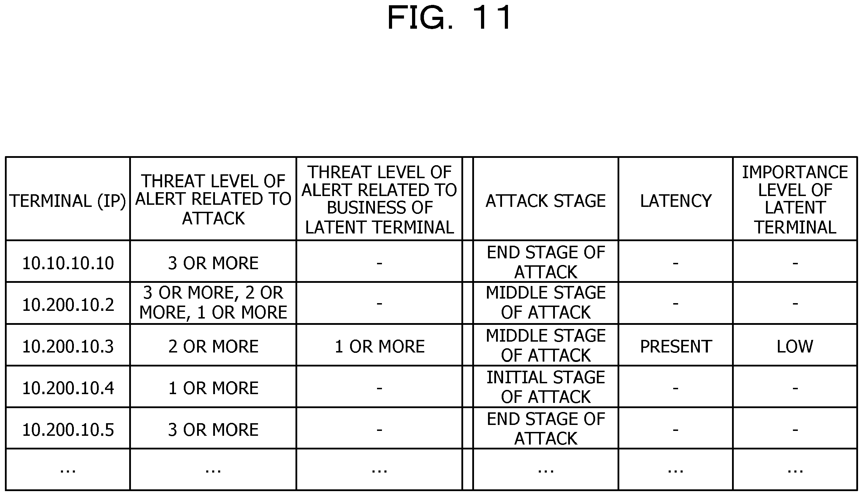

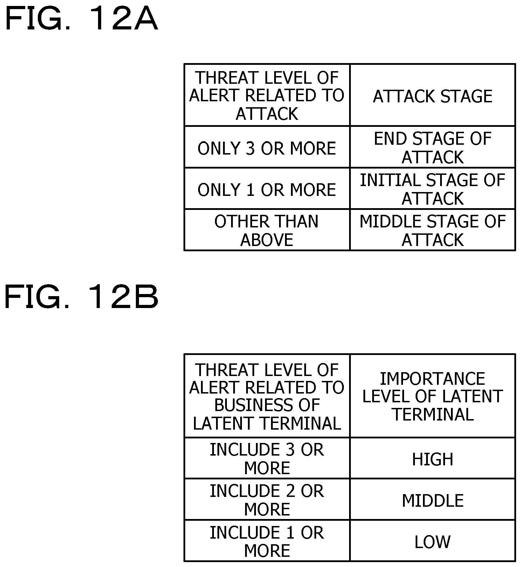

Returning to FIG. 4, the result output unit 46 generates a screen in which analysis results of the detection result analysis unit 44 are collected, and presents the screen to the administrator by displaying the screen on the display unit 93. FIG. 11 illustrates an example of the screen presented to the administrator. When generating the screen of FIG. 11, the result output unit 46 refers to an attack stage table illustrated in FIG. 12A and an importance level table of a latent terminal illustrated in FIG. 12B. Note that details of the tables of FIGs. 12A and 12B will be described later.

### [Processing of Attack Situation Output Device 30]

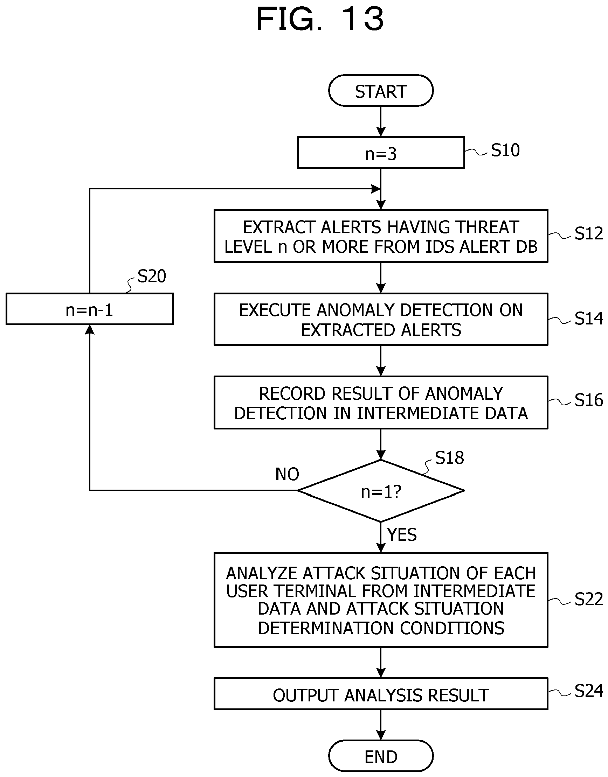

Next, processing of the attack situation output device 30 will be described in detail along a flowchart of FIG. 13 with reference to other drawings as appropriate. Note that the processing of FIG. 13 is processing in a case where a lower limit of the extraction condition is lowered stepwise such as the threat level of "3" or more, "2" or more, and "1" or more.

When the processing of FIG. 13 is started, first, in operation S10, the IDS alert extraction unit 40 sets a parameter n indicating a lower limit value of the threat level to 3 (n = 3).

Next, in operation S12, the IDS alert extraction unit 40 extracts IDS alerts having a threat level n or more (here, 3 or more) from the IDS alert DB 50. Here, the IDS alert extraction unit 40 also executes processing of collecting the extracted IDS alerts in units of the user terminals 70.

Next, in operation S14, the anomaly detection unit 42 executes anomaly detection on the extracted IDS alerts.

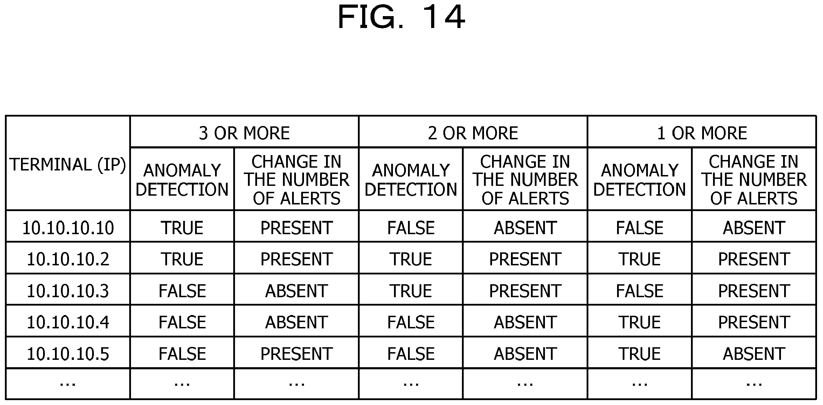

Next, in operation S16, the anomaly detection unit 42 records a result of the anomaly detection in intermediate data. Here, it is assumed that the intermediate data is data as illustrated in FIG. 14. As illustrated in FIG. 14, in the intermediate data, "anomaly detection (TRUE/FALSE)" and "change in the number of alerts (present/absent)" are recorded for each extraction condition (3 or more, 2 or more, and 1 or more) in association with the IP address of each user terminal 70.

Next, in operation S18, the IDS alert extraction unit 40 determines whether or not a value of the parameter n is 1. In a case where the determination is negative, the processing proceeds to operation S20, and the IDS alert extraction unit 40 decrements the parameter n by 1 (n = n - 1). Thereafter, the processing returns to operation S12, and the processing and determination of operations S12 to S18 and S20 are executed in the state of n = 2 (extraction condition is the threat level 2 or more). Moreover, in the state of n = 1 (extraction condition is the threat level 1 or more), the processing and determination of operations S12 to S18 are executed. That is, the extraction of the IDS alerts and the anomaly detection are executed while changing the extraction condition so as to be loosened stepwise. Thereafter, when the determination in operation S18 is positive, the processing proceeds to operation S22.

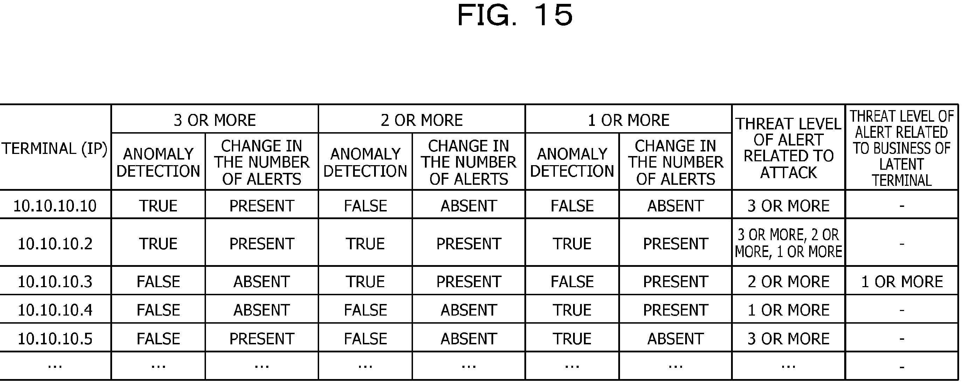

When the processing proceeds to operation S22, the detection result analysis unit 44 analyzes an attack situation of each user terminal 70 from the intermediate data and the attack situation determination conditions. Specifically, the detection result analysis unit 44 analyzes the attack situation by comparing the intermediate data of FIG. 14 with the attack situation determination conditions of FIG. 10. FIG. 15 illustrates an analysis result of the intermediate data of FIG. 14.

For example, in the case of the terminal with the IP address "10.10.10.10" of the intermediate data of FIG. 14, the extraction condition "3 or more" applies to a condition 1 of FIG. 10. Therefore, the detection result analysis unit 44 sets "3 or more" to the "threat level of the alert related to the attack".

Furthermore, in the case of the terminal with the IP address "10.200.10.2" of the intermediate data of FIG. 14, the extraction conditions °3 or more", "2 or more", and "1 or more" apply to the condition 1 of FIG. 10. Therefore, the detection result analysis unit 44 sets "3 or more", "2 or more", and "1 or more" to the "threat level of the alert related to the attack".

Furthermore, in the case of the terminal with the IP address °10.200.10.3" of the intermediate data of FIG. 14, the extraction condition "2 or more" applies to the condition 1 of FIG. 10. Therefore, the detection result analysis unit 44 sets "2 or more" to the "threat level of the alert related to the attack". On the other hand, the extraction condition "1 or more" applies to a condition 2 of FIG. 10. Therefore, the detection result analysis unit 44 sets "1 or more" to the "threat level of the alert related to business of the latent terminal".

Furthermore, in the case of "10.200.10.4" of the intermediate data of FIG. 14, the extraction condition "1 or more" applies to the condition 1 of FIG. 10. Therefore, the detection result analysis unit 44 sets "1 or more" to the "threat level of the alert related to the attack".

Moreover, in the case of "10.200.10.5" of the intermediate data of FIG. 14, the extraction condition "1 or more" applies to a condition 3 of FIG. 10. Therefore, the detection result analysis unit 44 sets, as the "threat level of the alert related to the attack", a change condition before the extraction condition is "2 or more", "FALSE" before "TRUE", and change in the number of alerts "present" (here, "3 or more").

Returning to FIG. 13, in the next operation S24, the result output unit 46 outputs an analysis result. At this time, the result output unit 46 processes the analysis result of FIG. 15 based on the tables of FIGs. 12A and 12B to generate the screen as illustrated in FIG. 11, and displays the generated screen on the display unit 93. Specifically, the result output unit 46 specifies an "attack stage (initial stage of the attack/end stage of the attack/middle stage of the attack)" of each user terminal 70 from the "threat level of the alert related to the attack" of each user terminal 70 based on the table of FIG. 12A. Furthermore, the result output unit 46 specifies an "importance level of the latent terminal (high/middle/low)" from the "threat level of the alert related to business of the latent terminal" of each user terminal 70 based on the table of FIG. 12B. Furthermore, the result output unit 46 sets "latency" in the screen of FIG. 11 to "present" regardless of whether the "importance level of the latent terminal" is high, middle, or low.

With the above processing, the entire processing of FIG. 13 ends. The screen of FIG. 11 includes the attack stage of each user terminal 70, presence or absence of the latency, and the importance level of the latent terminal. Therefore, the administrator may appropriately determine which user terminal 70 is to be preferentially handled by confirming the screen of FIG. 11.

As may be seen from the above description, in the present embodiment, the detection result analysis unit 44 and the result output unit 46 implement a function as an output unit that outputs information regarding a terminal determined to be an abnormal terminal and information regarding content of an attack in association with each other.

As described above in detail, according to the present embodiment, the IDS terminal 20 monitors communication and detects communication classified into any one of threat levels of a plurality of attacks according to a detection condition (signature). That is, the IDS terminal 20 detects information regarding communication including a threat level of an attack. Furthermore, in the attack situation output device 30, the IDS alert extraction unit 40 extracts IDS alerts satisfying a certain extraction condition from the IDS alert DB 50 (S12). Furthermore, the anomaly detection unit 42 executes anomaly detection that detects an abnormal terminal (anomaly terminal) by using the extracted IDS alerts of the respective user terminals 70 (S14). Then, the detection result analysis unit 44 and the result output unit 46 output information (IP address) regarding the abnormal terminal and information regarding content of the attack corresponding to an extraction condition when it is detected as the abnormal terminal in association with each other (S22 and S24, and FIG. 11). With this configuration, the attack situation output device 30 may output information by which the user terminal 70 that needs to be preferentially handled may be determined. Therefore, the administrator may appropriately determine which user terminal 70 is to be preferentially handled by confirming the screen of FIG. 11.

Furthermore, in the present embodiment, the processing of extracting the IDS alerts (S12) and the processing of performing the anomaly detection (S14) are executed a plurality of times by changing extraction conditions used by the IDS alert extraction unit 40. Furthermore, the detection result analysis unit 44 and the result output unit 46 output information (IP address) regarding the user terminal 70 detected at least once as an abnormal terminal and information regarding the content of the attack corresponding to results of the anomaly detection performed a plurality of times in association with each other. With this configuration, the detailed information regarding the content of the attack corresponding to the results of the anomaly detection performed a plurality of times may be provided to the administrator. Furthermore, according to the present embodiment, the administrator does not need to manually change the extraction condition, and may obtain appropriate information from an IDS alert group obtained from the IDS terminal 20.

Furthermore, in the present embodiment, the processing of extracting the IDS alerts (S12) and the processing of performing the anomaly detection (S14) are executed a plurality of times by changing the extraction conditions used by the IDS alert extraction unit 40 stepwise so as to be loosened. Furthermore, the detection result analysis unit 44 and the result output unit 46 determine information to be output based on whether an abnormal terminal has been detected before and after changing the extraction conditions (TRUE/FALSE) and whether the number of extracted IDS alerts has changed (present/absent) (see FIG. 10). With this configuration, it is possible to provide the administrator with highly accurate information regarding the content of the attack.

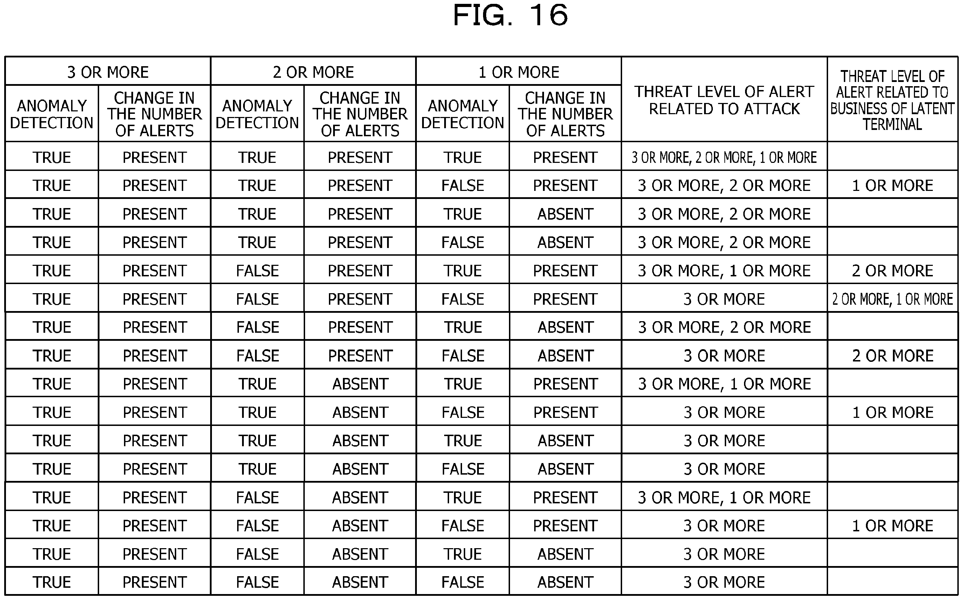

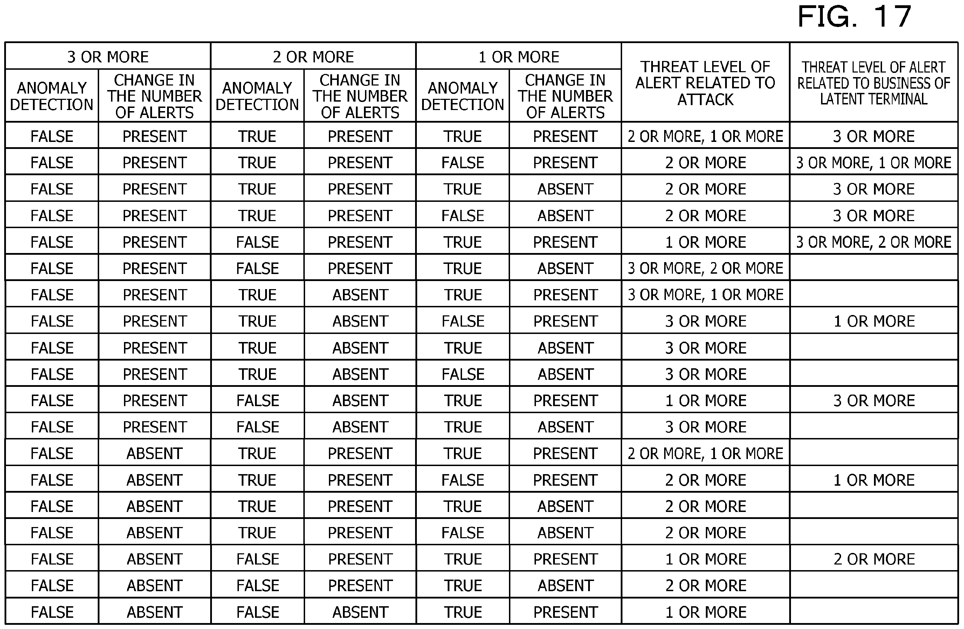

Note that, in the embodiment described above, the case has been described where the detection result analysis unit 44 performs the analysis as illustrated in FIG. 15 based on the attack situation determination conditions of FIG. 10, but the present disclosure is not limited to this. For example, as illustrated in FIGs. 16 and 17, tables in which the "threat level of the alert related to the attack" and the "threat level of the alert related to business of the latent terminal" are associated with each other may be prepared in advance for all combinations of "TRUE/FALSE" and "present/absent" that may be included in the intermediate data. In this case, since the detection result analysis unit 44 may obtain the analysis result of FIG. 15 only by applying the intermediate data of FIG. 14 to the tables of FIGs. 16 and 17, a processing load may be reduced.

### [First Modification]

In the embodiment described above, the case has been described where the IDS alert extraction unit 40 changes the extraction condition stepwise such as the threat level of "3" or more, "2" or more, and "1" or more. According to this method, it is possible to perform analysis focusing on an alert having a high threat level. However, the present disclosure is not limited to this, and for example, the IDS alert extraction unit 40 may change the extraction condition stepwise such as the threat level of "1" or less, "2" or less, and "3" or less. According to this method, it is possible to perform analysis focusing on an alert having a low threat level.

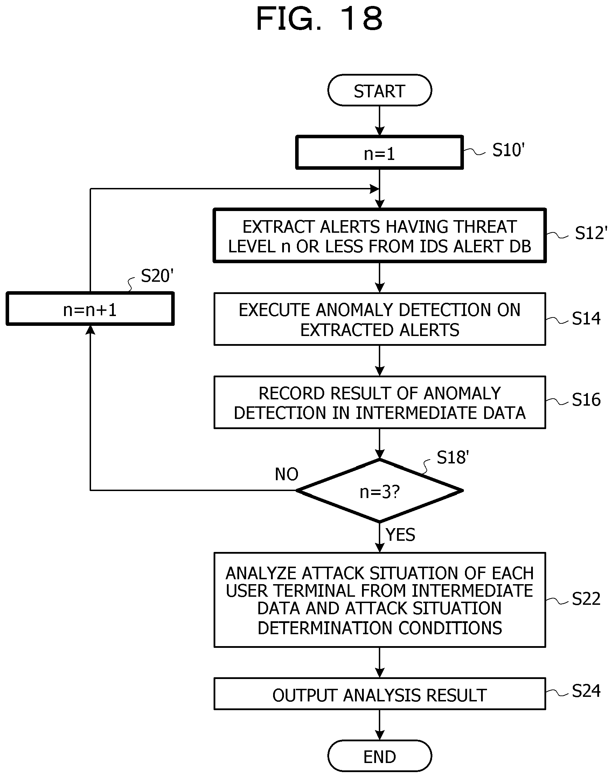

In FIG. 18, processing of the attack situation output device 30 in a case where a first modification is adopted is illustrated by a flowchart. In the processing of FIG. 18, operations S10', S12', S18', and S20' are executed instead of operations S10, S12, S18, and S20 of FIG. 13.

Specifically, in operation S10' of FIG. 18, the IDS alert extraction unit 40 sets a parameter n indicating an upper limit value of the threat level to 1 (n = 1).

Next, in operation S12', the IDS alert extraction unit 40 extracts IDS alerts having a threat level n or less from the IDS alert DB 50. Furthermore, the IDS alert extraction unit 40 also executes processing of collecting the extracted IDS alerts in units of the user terminals 70. Thereafter, operations S14 and S16 are executed in a similar manner to those in the embodiment described above.

Then, when the processing proceeds to operation S18', the IDS alert extraction unit 40 determines whether or not a value of the parameter n is 3. In a case where the determination is negative, the processing proceeds to operation S20', and the IDS alert extraction unit 40 increments the parameter n by 1 (n = n + 1). Thereafter, the processing returns to operation S12'.

Note that the processing in operations S22 and S24 is similar to that in the embodiment described above. That is, the detection result analysis unit 44 obtains an analysis result similar to that of FIG. 15 from intermediate data similar to that of FIG. 14 by using attack situation determination conditions similar to those of FIG. 10. Then, the result output unit 46 generates a screen similar to that of FIG. 11 from the analysis result similar to that of FIG. 15, and displays the screen on the display unit 93.

As described above, in the present first modification, the upper limit value of the threat level is changed stepwise as the extraction condition of the IDS alerts. Also in this way, effects similar to those of the embodiment described above may be obtained.

### [Second Modification]

Note that, in the embodiment and the first modification described above, the case has been described where the lower limit value or the upper limit value of the extraction condition is changed stepwise. However, the present disclosure is not limited to this. For example, the IDS alert extraction unit 40 may change the threat level of an object to be extracted stepwise such as only "1", only "2", and only "3". That is, the extraction condition may be changed stepwise so as not to overlap. According to this method, it is possible to perform analysis focusing on individual threat levels.

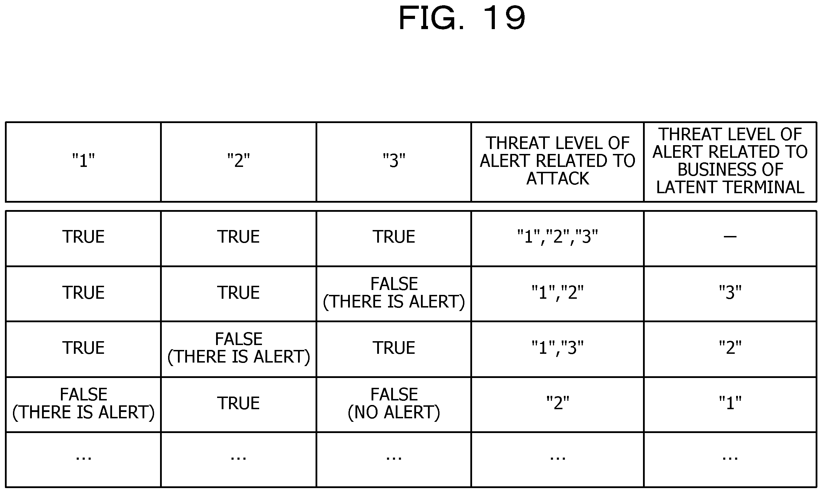

FIG. 19 illustrates attack situation determination conditions used in a second modification. In the present second modification, the "threat level of the alert related to the attack" and the "threat level of the alert related to business of the latent terminal" are managed in association with whether the user terminal 70 is determined to be an abnormal terminal (TRUE/FALSE) and whether an IDS alert is extracted (present/absent) in each extraction condition. Note that, in the present second modification, the extraction condition in which the user terminal 70 is determined to be an abnormal terminal (the extraction condition that has become "TRUE") directly becomes the "threat level of the alert related to the attack". Furthermore, the extraction condition in which the IDS alert is extracted although the user terminal 70 is not determined to be an abnormal terminal (the extraction condition that has become "FALSE (there is an alert)" becomes the "threat level of the alert related to business of the latent terminal".

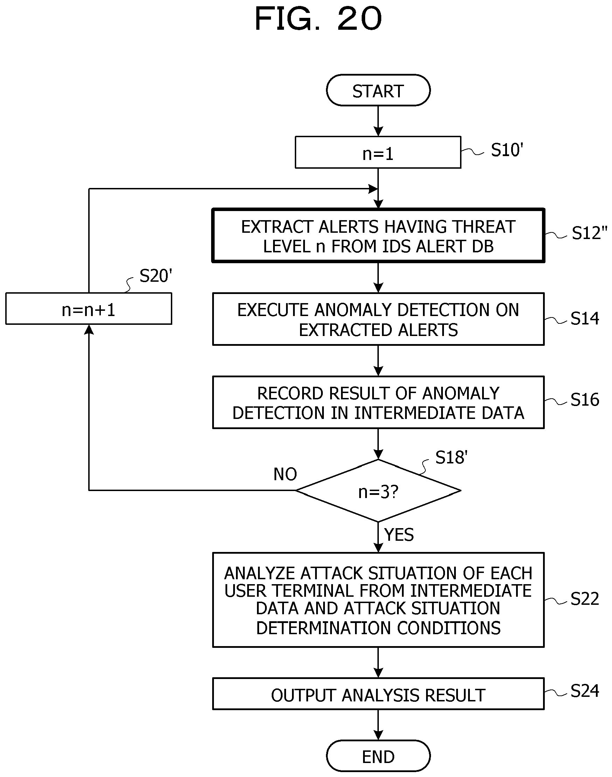

In FIG. 20, processing of the attack situation output device 30 in a case where the present second modification is adopted is illustrated by a flowchart. In the processing of FIG. 20, operation S12" is executed instead of operation S12' of FIG. 18, but other processing is similar to that of FIG. 18. In operation S12", the IDS alert extraction unit 40 extracts IDS alerts having a threat level n from the IDS alert DB 50. Note that, in operation S22, the detection result analysis unit 44 analyzes the processing result of the anomaly detection unit 42 by using the attack situation determination conditions of FIG. 19.

Note that, in FIG. 20, the case has been described where the operations S10', S18', and S20' are executed as in FIG. 18. However, the present disclosure is not limited to this. That is, the operations S10, S18, and S20 of FIG. 13 may be executed instead of the operations S10', S18', and S20' of FIG. 20.

Note that, in the embodiment and the modifications described above, the extraction condition is changed stepwise to execute the extraction of the alerts and the anomaly detection, and the information regarding the content of the attack corresponding to the extraction condition when the user terminal 70 is determined to be an abnormal terminal is output in association with the information regarding the user terminal 70. However, the present disclosure is not limited to this, and the alerts may be extracted by using one extraction condition (first condition) to execute the anomaly detection, and the information regarding the content of the attack corresponding to the extraction condition may be output in association with the information regarding the user terminal 70. Also in this way, it is possible to output information by which a terminal that needs to be preferentially handled may be determined.

Note that the processing functions described above may be implemented by a computer. In that case, a program in which processing content of functions that a processing device needs to have is described is provided. The program is executed in the computer, whereby the processing functions described above are implemented in the computer. The program in which the processing content is described may be recorded in a computerreadable storage medium (note that a carrier wave is excluded).

In the case of distributing the program, for example, the program is sold in a form of a portable storage medium such as a digital versatile disc (DVD) or a compact disc read only memory (CD-ROM) in which the program is recorded. Furthermore, it is also possible to store the program in a storage device of a server computer, and transfer the program from the server computer to another computer via a network.

The computer that executes the program stores, for example, the program recorded in the portable storage medium or the program transferred from the server computer in a storage device of its own. Then, the computer reads the program from the storage device of its own, and executes processing according to the program. Note that the computer may also read the program directly from the portable storage medium and execute the processing according to the program. Furthermore, the computer may also sequentially execute the processing according to the received program each time the program is transferred from the server computer.

The embodiment described above is a preferred example of the present disclosure. However, the present disclosure is not limited to this, and various modifications may be made in a range without departing from the scope of the present disclosure.

## Claims

1. An attack situation output program for causing a computer to execute a process, the process comprising:
extracting, from information regarding communication that includes a threat level of an attack, information regarding first communication in which the threat level satisfies a first condition;
executing anomaly detection processing that detects a suspicious terminal by using the information regarding the first communication of each terminal; and
outputting information regarding a first terminal detected as the suspicious terminal by the anomaly detection processing and information regarding content of an attack that corresponds to the first condition, in association with each other.

2. The attack situation output program according to claim 1,
wherein the extracting and the anomaly detection processing are executed a plurality of times by changing the first condition, and
wherein the information regarding the first terminal detected as the suspicious terminal at least once in the anomaly detection processing executed in the plurality of times and the information regarding content of the attack that corresponds to results of the anomaly detection processing executed the plurality of times related to the first terminal are output in association with each other.

3. The attack situation output program according to claim 2,
wherein the extracting is executed the plurality of times by changing the first condition stepwise so that a condition to extract the first communication becomes loose, and
wherein the information regarding content of the attack to be output is determined based on whether the first terminal is detected as the suspicious terminal before and after the first condition is changed and whether a number of times of the first communication of the first terminal is changed before and after the first condition is changed.

4. The attack situation output program according to claim 2,
wherein the extracting is executed the plurality of times by changing the first condition stepwise so that a condition to extract the first communication does not overlap, and
wherein the information regarding content of the attack to be output is determined based on content of the first condition when the first terminal is detected as the suspicious terminal in the anomaly detection processing and whether the first communication has been extracted under the first condition when the first terminal is not detected as the suspicious terminal in the anomaly detection processing.

5. The attack situation output program according to any one of claims 1-4, wherein the information regarding content of the attack to be output is at least one of information regarding a threat level related to an attack and a threat level related to business of a latent terminal.

6. An attack situation output device comprising:
an extraction unit configured to extract, from information regarding communication that includes a threat level of an attack, information regarding first communication in which the threat level satisfies a first condition;
an execution unit configured to execute anomaly detection processing that detects a suspicious terminal by using the information regarding the first communication of each terminal; and
an output unit configured to output information regarding a first terminal detected as the suspicious terminal by the anomaly detection processing and information regarding content of an attack that corresponds to the first condition, in association with each other.

7. The attack situation output device according to claim 6,
wherein an extraction processing by the extraction unit and the anomaly detection processing by the execution unit are executed a plurality of times by changing the first condition, and
wherein the output unit outputs the information regarding the first terminal detected as the suspicious terminal at least once in the anomaly detection processing executed in the plurality of times and the information regarding content of the attack that corresponds to results of the anomaly detection processing executed the plurality of times related to the first terminal in association with each other.

8. The attack situation output device according to claim 7,
wherein the extraction unit executes the extraction processing the plurality of times by changing the first condition stepwise so that a condition to extract the first communication becomes loose, and
wherein the information regarding content of the attack to be output is determined based on whether the first terminal is detected as the suspicious terminal before and after the first condition is changed and whether a number of times of the first communication of the first terminal is changed before and after the first condition is changed.

9. The attack situation output device according to claim 7,
wherein the extraction unit executes the extraction processing the plurality of times by changing the first condition stepwise so that a condition to extract the first communication does not overlap, and
wherein the information regarding content of the attack to be output is determined based on content of the first condition when the first terminal is detected as the suspicious terminal in the anomaly detection processing and whether the first communication has been extracted under the first condition when the first terminal is not detected as the suspicious terminal in the anomaly detection processing.

10. The attack situation output device according to any one of claims 6-9, wherein the information regarding content of the attack to be output is at least one of information regarding a threat level related to an attack and a threat level related to business of a latent terminal.

11. An attack situation output system comprising:
a detection device configured to detect information regarding communication that includes a threat level of an attack; and
an attack situation output device configured to:
acquire a detection result by the detection result,
extract information regarding first communication in which the threat level satisfies a first condition from the acquired detection result,
execute anomaly detection processing that detects a suspicious terminal by using the information regarding the first communication of each terminal, and
output information regarding a first terminal detected as the suspicious terminal by the anomaly detection processing and information regarding content of an attack that corresponds to the first condition, in association with each other.
